# EUROPEAN PATENT SPECIFICATION

(11) **EP 1 294 495 B1**
(45) Date of publication and mention of the grant of the patent: **26.04.2006**
(21) Application number: 01931892.2
(22) Date of filing: 18.05.2001
(51) Int. Cl.: B07B 1/00, B07B 1/46, B01D 29/21, B32B 7/12, B32B 37/00

(54) **APPARATUS AND METHODS FOR MAKING A SCREEN AND A SCREEN MADE BY THE METHOD**
VORRICHTUNG UND VERFAHREN ZUR HERSTELLUNG EINES SIEBES UND SIEB NACH DIESEM VERFAHREN
DISPOSITIF ET PROCEDES POUR FABRIQUER UN TAMIS ET TAMIS FABRIQUE SELON CE PROCEDE

(30) Priority: 27.06.2000 US 603531
(43) Date of publication of application: 26.03.2003
(73) Proprietor: Varco I/P, Inc., Houston, TX 77051 (US)
(72) Inventor: ADAMS, Thomas Cole, Hockley, TX 77447 (US); SEYFFERT, Kenneth Wayne, Houston, TX 77018 (US); LARGENT, David Wayne, Cleveland, TX 77327 (US); SCHULTE, David Lee, Jr., Broussard, LA 70518 (US); GRICHAR, Charles Newton, Houston, TX 77009 (US); LEONE, Vincent Dominick, Houston, TX 77069 (US); WALKER, Jeffery Earl, Lafayette, LA 70508 (US); MCCLUNG, Guy Lamont, III, Spring, TX 77379 (US)
(74) Representative: Lucas, Brian Ronald
(86) International application number: PCT/GB2001/002253
(87) International publication number: WO 2002/000360

(56) References cited:
- DE-A- 19 931 258
- US-A- 5 240 479
- US-A- 5 868 889
- US-A- 5 971 159

## Description

This invention relates to an apparatus and a method for making a screen, and to a screen made by the method. The screen is more particularly, but not exclusively, for use in separating solids from drilling mud used in the drilling of oil and gas wells.

The need for solids control in drilling mud used in hydrocarbon well drilling is well known in the prior art. Drilling mud, typically a mixture of clay, water and various additives, is pumped down through a hollow drill string (pipe, drill collar, bit, etc.) into a well being drilled and exits through holes in a drill bit. The mud picks up cuttings (rock) and other solids from the well and carries them upwardly away from the bit and out of the well in a space between the well walls and the drill string. At the top of the well, the solids-laden mud is discharged over a shale shaker, a device which typically has a series of screens arranged in tiered or flat disposition with respect to each other. The screens catch and remove solids from the mud as the mud passes through them. The mud is then reused. If drilled solids are not removed from the mud used during the drilling operation, recirculation of the drilled solids can create weight, viscosity, and gel problems in the mud, as well as increasing wear on mud pumps and other mechanical equipment used for drilling.

In some shale shakers a fine screen cloth is used with the vibrating screen. The screen may have two or more overlying layers of screen cloth. The layers may be bonded together. A support such as a perforated or apertured plate may be used beneath the screen or screens. The frame of the vibrating screen is resiliently suspended or mounted upon a support and is caused to vibrate by a vibrating mechanism, for example, the vibrating mechanism may comprise an unbalanced weight on a rotating shaft connected to the frame. Each screen may be vibrated by vibratory equipment to create a flow of trapped solids on the top surfaces of the screen for removal and disposal of solids. The fineness or coarseness of the mesh of a screen may vary depending upon mud flow rate and the size of the solids to be removed.

Many screens used with shale shakers are flat or nearly flat (i.e. substantially two-dimensional). Other screens, due to corrugated, depressed, or raised surfaces are three-dimensional. U.S. Patents 5,417,793; 5,417,858; and 5,417,859 disclose non-flat screens for use with shale shakers. These screens have a lower planar apertured plate with a multiplicity of spaced-apart apertures or openings therethrough. The undersides of troughs of undulating screening material are bonded to the apertured plate. Such screens present a variety of problems, deficiencies, and disadvantages, including: decreased flow area due to area occluded by solid parts of the apertured plate; necessity to either purchase relatively expensive apertured plate or provide for in-house perforating of a solid plate; plate weight increases wear on parts such as rubber screen supports or cushions and can inhibit required vibration; large plate surface area requires relatively large amount of bonding means for bonding screens to the plate; and a finished screen which is relatively heavy increases handling problems, hazards, and cost of shipping.

A vibrating screen may be formed from one or more layers of wire mesh. Wire mesh is generally described with reference to the diameter of the wires from which it is woven, the number wires per unit length (called the mesh count) and the shape or size of the openings between wires. Wire mesh comes in various grades. "Market" grade mesh generally has wires of relative large diameter. "Mill" grade has comparatively smaller diameter wires and "bolting cloth" has the smallest diameter wire. The type of mesh chosen depends on the application. Smaller diameter wires have less surface and thus less drag, resulting in greater flow rates. Smaller diameter wires also result, for a given opening size, in a larger percentage of open area over the total area of the screen, thus allowing greater flow rates and increased capacity. However, screens of bolting cloth tears more easily than market or mill grade screens, especially when used in harsh conditions such as drilling and mining operations. The smaller diameter wires tend to have less tensile strength and break more easily, and the finer mesh also tends not to retain its shape well.

Most meshes suffer from what is termed "near sized particle blinding. During vibration, wires separate enough to allow particles of substantially the same size or slightly larger than the openings to fall between the wires and become lodged, thus "blinding" the openings of the screen and reducing capacity of the screen. If a particle becomes lodged when the wires are at the maximum distance apart, it is almost impossible to dislodge the particle. Sometimes, however, wires will subsequently separate further to release the lodged particle. Unfortunately, some wire mesh, especially bolting cloth, is tensioned. Tensioning restricts movement of the wires. Restricting movement assists in holding the shape of the wire mesh, keeping the size of the openings consistent to create a more consistent or finer "cutting point" and reducing abrasion from wires rubbing against each other. However, restricted movement of the wires reduces the probability that, once a near sized particle becomes stuck, the wires will subsequently separate to allow the particle to pass. Use of smaller diameter wires, with smaller profiles, helps to reduce blinding. With a smaller diameter wire, a particle is less likely to become lodged midway through the opening.

Multiple layers of mesh may be used to alleviate blinding. U.S. Patent No. 4,033,865, describes layering two meshes in a manner that results in at least one wire of the lower of the two meshes bisecting each opening in the upper mesh. The openings in each mesh are at least twice as wide as the diameters of the wires and the lower mesh has openings the same size as or slightly larger than the openings in the upper mesh. The lower mesh, when held tightly against the upper mesh, prevents particles from migrating far enough into an opening in the upper mesh to be trapped. Some relative movement of the layers also helps to dislodge particles caught in the upper layer. The two-layer arrangement has the further benefit of a finer "cutting point," allowing smaller particles to be separated out. A third "backing" layer of relatively coarse, mill grade mesh is often used to carry most of the load on the screen and to increase the tensile strength of the screen.

Another problem faced in most applications is the tearing of the screen. The problem can be especially acute in heavy duty applications such as drilling and mining. A torn screen must be replaced or repaired. To facilitate repair, the screen layers are bonded to a rigid or semi-rigid support panel that has a pattern of large openings, forming on the screen a plurality of small cells of wire mesh. When a tear occurs in the screen, the mesh remaining within the cell in which the tear occurred is cut out and the cell is plugged. The capacity of the screen is diminished but its life is extended. Typically, several cells of a screen can be repaired before its capacity drops far enough to require replacement. Unfortunately, bonding the screen to the support panel further restricts relative movement of the layers and the wires in each mesh layer, thus compounding the problem of blinding.

Blinding and tearing of the screens reduce the capacity of the screen continually through its useful life. Although capacity can be increased by increasing the total area the screens, the size of the screen is limited in most applications, such as on drilling rigs, especially those on offshore platforms. There has thus been generally a trade-off between capacity, longevity, repairability and resistance to blinding of the screens.

GB-A-2,312,858 discloses a method for making a screen assembly comprising the steps of placing three layers of mesh of increasing mesh size and a perforated thermoplastic sheet in a sandwich, heating the perforated thermoplastic sheet and letting the sandwich cool to bond the three layers of mesh together. Also disclosed is an alternative of using a liquid adhesive, such as epoxy.

US-A-5,868,889 discloses a process for manufacturing a paper filter for filtering gases and liquids. The process involves pleating a layer of paper filter material and applying the lower folded edge of each pleat to a bead of adhesive which was applied to a micro-fibre fleece with two adhesive application nozzles.

US-A-5,971,159 discloses a screen assembly for a shale shaker. The screen assembly comprises three layers of undulating wire mesh bonded together and bonded to a panel.

PCT Publication No. WO 01/39862 discloses a method for making a screen for a vibratory separator, the method comprising the steps of placing at least two layers of screening material one on top of the other, introducing glue to one of the at least two layers of screening material for adhering at least portions of them together, said glue introduced to one of the at least two layers of screening material from a roller with a patterned surface thereon such that the amount of glue is introduced to the at least two layers of screening material in a pattern substantially corresponding to said patterned surface of the roller.

There is a need for a (either non-flat or flat) screen which is consumable, efficient and cost-effective, yet readily and inexpensively made, easy to handle, and relatively inexpensive to transport.

According to the present invention, there is provided a method for making a screen for a vibratory separator using an apparatus comprising a main body and a plurality of nozzles movably connected thereto and at least one edging nozzle, the method comprising the steps of placing at least one layer of screening material below at least part of said apparatus,
applying glue from at least one of said plurality of nozzles in a pattern to at least a portion of the at least one layer of screening material by moving said plurality of nozzles over the at least one layer of screening material,
applying a glue bead from the at least one edging nozzle to the screening material with said edging nozzle, to facilitate creation of at least a part of a border to said screen, and
shearing the screening material along said glue bead to create an edge to said screening material.

Preferred or advantageous steps in the method of the invention are set out in Claims 2 to 10.

The invention also provides a apparatus for making a screen, said apparatus characterised in that it comprises a manifold having a plurality of nozzles arranged thereon for applying glue to a screen and at least one edging nozzle for applying a glue bead to facilitate creation of at least a part of a border to said screen and a shearing apparatus for shearing the screening material along said glue bead to create an edge to said screening material.

Preferred or advantageous features of the invention are set out in Claims 12 to 18.

The invention also provides a screen according to claim 19. In a preferred embodiment the screen is a roll of screen.

For a better understanding of the present invention, reference will now be made, by way of example, to the accompanying drawings, in which:
Figure 1A is a schematic under plan view of an apparatus for applying glue to a screen in accordance with the present invention;
Figures 1B and 1C are top plan views of glue patterns used in a screen assembly and in a method in accordance with the present invention;
Figures 2A to 2D are top plan views of glue patterns used in a screen assembly and in a method in accordance with the present invention;
Figure 3 is a top plan view of a screen component used in a screen assembly in accordance with the present invention;
Figure 4A is an end elevation of a rolled up screen component, for example, like the screen component of Figure 3;
Figure 4B is an end elevation of a rolled up screen component for example, like the screen component of Figure 3;
Figure 5A is a top plan view of a substrate for glue for a screen assembly and used in a method in accordance with the present invention;
Figure 5B is a top plan view that shows the substrate of Figure 5A with a glue pattern deposited thereon;
Figure 5C is a top plan view of the glue pattern of Figure 5B removed from the substrate of Figure 5A;
Figure 5D is an end elevation of the glue pattern of Figure 5C in a roll; and
Figure 6A to 6C are each a side elevations of a screen assembly in accordance with the present invention.

Figure 1A shows a glue applicator apparatus 100 which has a main body 4 with appropriate controls, flow lines, etc. as are well known in the art and two movable nozzle manifolds 1 and 2 that are movably connected to the apparatus 100 with any known suitable manifold movement apparatus. A third nozzle manifold -3 is secured immovably with respect to the apparatus 100. In one particular aspect a scotch yoke cam arrangement CA may be used to move the manifolds 1 and 2 with respect to the main body 4.

As shown by the arrow 8 in Figure 1A the manifolds. 1, 2 oscillate at approximately a right angle to the main body 4, although it is within the scope of this invention for them to be positioned so that they oscillate at any desired angle with respect to the main body 4. An arrow 9 indicates the direction of travel of screening material (including but not limited to any screening material disclosed herein) beneath the nozzles 6 of the manifold 1, nozzles 5 of the manifold 2, and nozzles 7 of the manifold 3. A conveyor, such as a conveyor belt or trolley may be used to convey the screens in the directional of travel 9. Any number of nozzles may be used on any of the manifolds and any number of manifolds may be used, stationary or movable with respect to the main body 4. The manifold 3 may be deleted as may be either or both of the manifolds 1 and 2. The position of the nozzles 7 may be adjusted with respect to the manifold 3 and moved as desired prior to glue application. Once positioned they are releasably fixed in place with any suitable fixing apparatus and/or fastener(s).

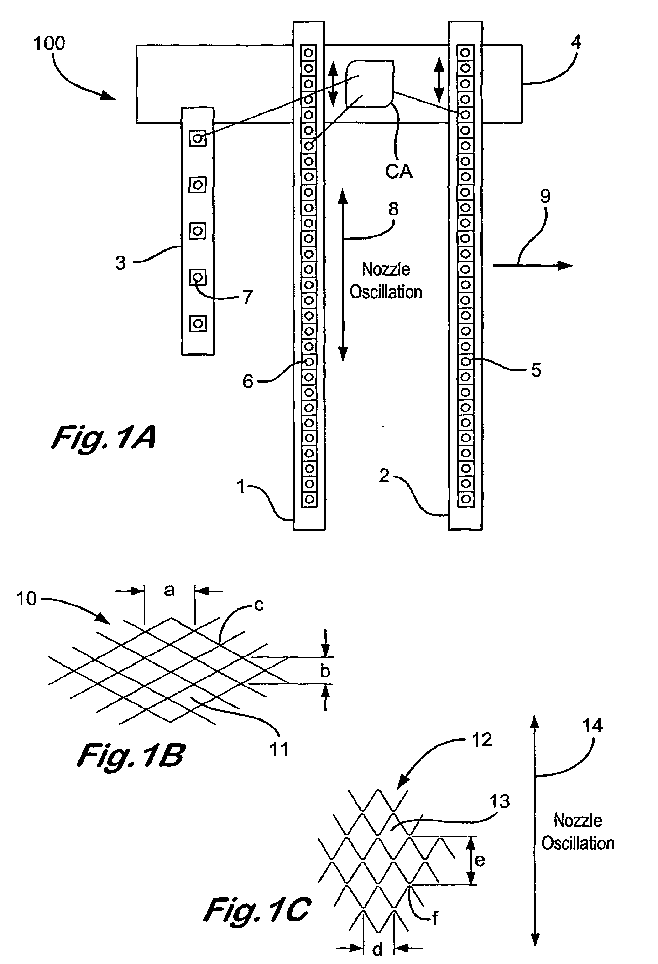

In certain particular aspects, an apparatus 100 has movable manifolds whose oscillation rate is adjustable from 7 to 200 oscillations per minute and whose oscillation width is adjustable up to 4.5cm (1.75 inches). The screening material, in certain aspects, is movable beneath the glue nozzles at between 0.025 to 0.15m/s (5 and 30 feet per minute) and the nozzles of the movable manifolds are on 4.2cm (1.65 inch) centres (i.e., nozzle centres are 4.2cm (1.65 inches) apart from each other). In certain aspects the tips of the nozzles (on all manifolds) are adjustable up and down so that nozzle-tip-to-screening material distance is adjustable between 0.6cm (one-quarter inch) to 2.5cm (one inch). The spacing of the nozzles of the manifold 3 can be adjusted as desired. Control apparatus CA can automatically or as desired provide glue flow to or shut-off glue flow to any nozzle or any number of selected nozzles, for example, but not limited to, every other nozzle. Also, either of the movable manifolds may be used in a stationary mode while the other oscillates. In certain particular aspects the glue beads for the screens of Figures 1B to 2D are as previously described herein or they are between 0.08 to 0.32 square cm (0.012 to 0.05 square inches) in cross-sectional area, when applied to screening material moving beneath the glue nozzles at between five to fifteen feet per minute or between 0.045 to 0.32 square cm (0.007 to 0.05 square inches) with material moving between 0.075 to 0.15m/s (fifteen to thirty feet per minute). Particular glues that may be used for the glue beads are known PUR glue and known EVA glue.

Figure 1B shows a glue bead pattern 10 applied by an apparatus as in Figure 1A. The lines in Figure 1B indicate the centre of linear glue beads and any glue bead disclosed herein may be employed. The screen with such linear glue beads is sheared by shearing down the length of the glue bead either manually with a shearing device, knife or scissors or with an appropriate shearing apparatus. The distance "a" is the distance between adjacent horizontal vertices (as viewed in Figure 1B) of the plurality of parallelograms 11 and the distance "b" is the distance between adjacent vertical vertices (as viewed in Figure 1B) of the parallelograms 11. Letter "c" indicates a radius of curvature for a curve portion indicating a change in glue bead direction. In one particular glue bead pattern according to the present invention the distance "a" is about 7.4cm (2.90 inches); the distance "b" is about 4.2cm (1.65 inches); and "c" is 0.33cm (0.13 inches).

Figure 1C shows a glue bead pattern 12 applied by an apparatus as in Figure 1A (or by one of the apparatuses previously discussed above). The lines in Figure 1C indicate the centre of linear glue beads (any glue bead disclosed herein may be employed for these beads). The distance "d" is the distance between adjacent horizontal vertices (as viewed in Figure 1C) of a plurality of parallelograms 13 and the distance "e" is the distance between adjacent vertical vertices (as viewed in Figure 1C) of the parallelograms 13. Letter "f" indicates a radius of curvature of a curve indicating a change in direction of a glue bead. In one particular glue bead pattern according to the present invention the distance "d" is about 4.8cm (1.90 inches); the distance "e" is about 8.4cm (3.30 inches); and "f" is 0.33cm (0.13 inches). It is within the scope of certain embodiments of this invention for the radius of curvature (for example, dimension "c" or "f") to range between 0.025cm (0.01 inches) and 7.6cm (3 inches).

As with the arrow 8, Figure 1A, the arrow 14 in Figure 1C indicates the direction of movement of the movable nozzle manifolds to produce the pattern 12 (and the pattern 10, Figure 1B). With appropriate settings for the speed of movement of screening material beneath the manifolds of the apparatus 100 and appropriate speed of movement of the movable manifolds a desired glue bead pattern may be produced.

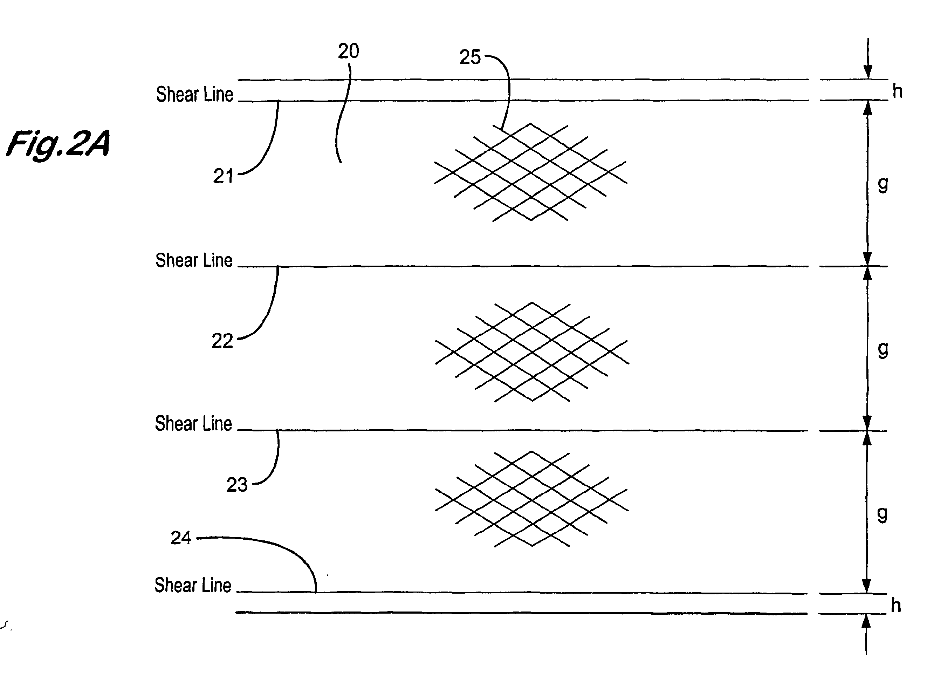

Figure 2A shows screening material 20 to which has been applied a glue bead pattern 25 using an apparatus according to the present invention, including, but not limited to an apparatus like the apparatus 100 of Figure 1A. It is to be understood that any desirable glue bead pattern could, according to the present invention, be applied to the screening material 20. Lines 21, 22, 23, and 24 indicate the centre line of linear a glue beads applied, for example, by a manifold like the manifold 3, Figure 1A, with four glue nozzles (or a manifold with more than four nozzles, but with only four of them operative for this method). Alternatively, according to the present invention, the glue beads whose centres are the lines 21-24 may be applied before or after the screening material 20 is fed beneath the movable nozzles that produce the pattern 25 (which is to be understood as extending across substantially all of the screening material 20 although shown only partially on three sections thereof in Figure 2A).

The lines 21-24 are shear lines along which the screening material 20 are cut following glue pattern deposition thereby producing three sheets of glue-patterned screening material each of desired width "g". Thus three sheets are produced (of any desired length) which each has a glue bead along its spaced apart sides following shearing of the screening material along the lines 21-24. In one particular aspect the distance "g" is about 29.8cm (11.75 inches) and the distance "h" is about 3.5cm (1.38 inches).

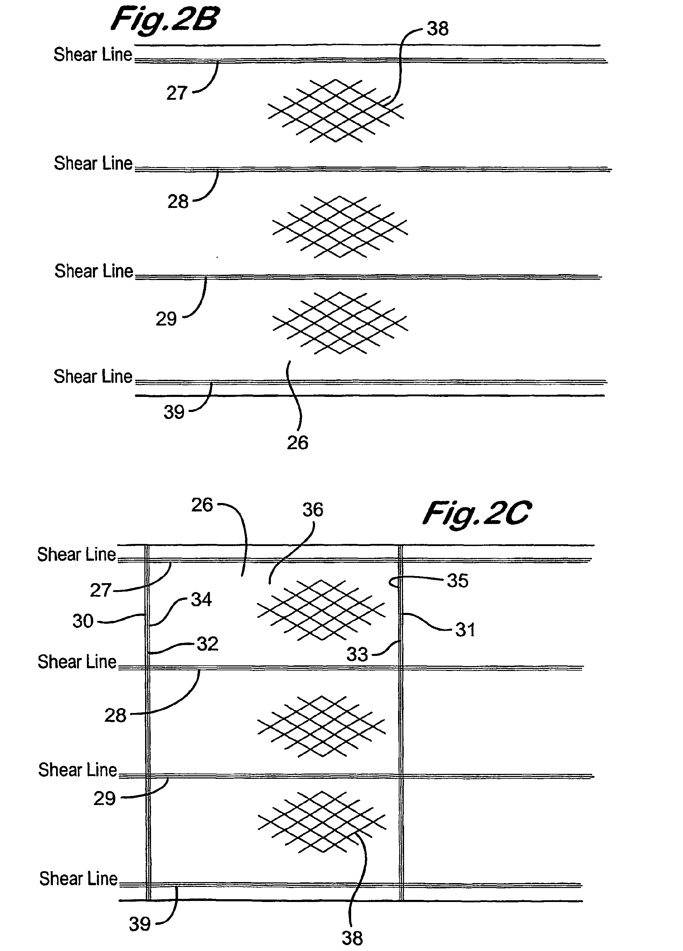

Figure 2B shows screening material 26, like the screening material 20, with entire glue beads 27-29, 39 illustrated, each with a shear line down the glue bead. Figure 2C shows the screening material 26 also with vertical (as viewed in Figure 2C) spaced-apart glue beads 30, 31 with shear lines 32, .33. With such beads 30, 31 screening material sections are produced with ends having a glue bead edge, for example as the ends 34, 35 of the section 36. The screening material 26 has a glue bead pattern 38 which may be any suitable glue bead pattern and may be any glue pattern disclosed herein. The glue beads 30, 31 may be applied with any suitable apparatus as described above.

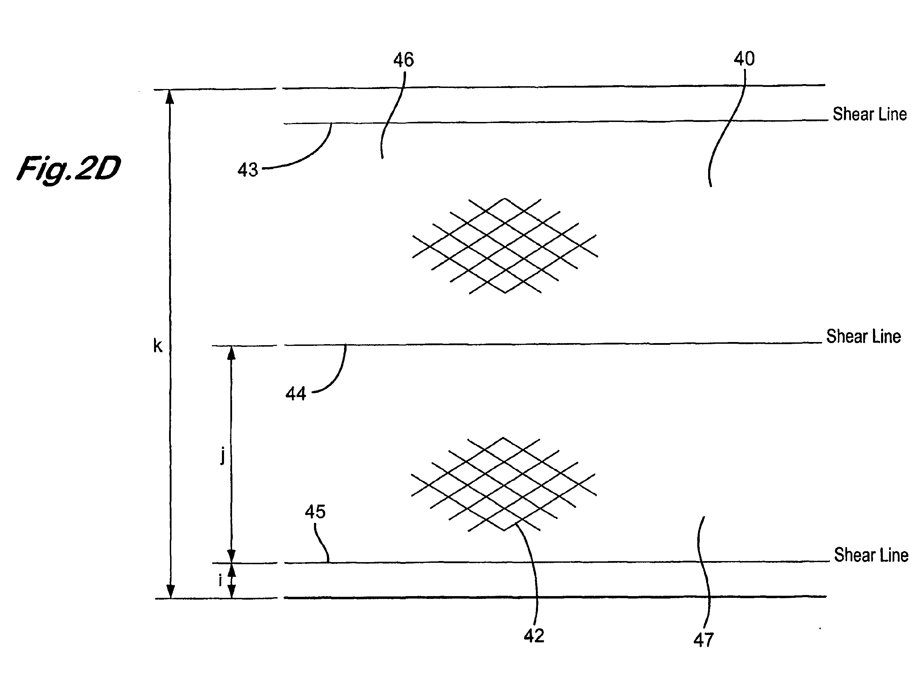

Although Figures 2A to 2C illustrate a method in which three screen sub-sections extend across the width of the initial sheet of screening material, it is within the scope of this invention to produce one, two, four, five, or more screens from one initial width of screening material. Figure 2D illustrates screening material 40 which has a glue pattern 42 applied thereto according to the present invention. Three glue beads (not shown in their entirety) each have a shear line 43, 44, 45. Upon shearing of the screening material 40 along the shear lines 43 to 45, two screen sections 46, 47 will be produced. In one particular aspect the distance "i" is about 6.35cm (2.50 inches); the distance "j" about 41.9cm (16.50 inches); and the distance "k" about 97cm (38 inches). Any pattern may be used for the glue pattern 42. It is within the scope of this invention to apply glue beads to form glued screen section ends as with the glue beads 30, 31 in Figure 2C.

Screening material and/or a substrate on which glue is to be deposited may be moved beneath such apparatus or dispenser at a movement rate between 0.0025m/s (6 inches per minute) and 0.25m/s (50 feet per minute). In certain other embodiments this rate is between 0.025m/s (5 feet per minute) and 0.15m/s (30 feet per minute).

In other embodiments of the present invention a glue pattern is applied to a substrate other than a screen or mesh or combination or multiple thereof. In certain embodiments the glue pattern on the substrate remains on the substrate and the glue/substrate combination is used with or on one or with, on, or between more than one layer of screen or mesh to form a screen assembly. In other embodiments the glue pattern, for example in a cured, semi-cured, or incompletely cured state, is separated from the substrate and applied between, to or on a layer or layers of screen and/or mesh to form a screen assembly. It is within the scope of this invention for such embodiments to employ any suitable glue, including but not limited to thermoplastic and/or thermosetting glues. Any suitable substrate may be employed, including but not limited to, paper, cardboard, kraft paper, wax paper, waxed cardboard, release liner material, and material from which glue is separable without deforming or destroying the glue and without adversely affecting a desired glue pattern.

In certain embodiments a sheet or piece of a glue/substrate combination or a glue pattern separated from a substrate is formed into a roll of material (with glue to the outside or glue to the inside when the substrate is included) which is then used in the formation of a screen assembly. A glue/substrate combination or separated glue pattern according to the present invention may, according to the present invention, be used to make a screen assembly in any known manner in which pressure and/or heat is applied to a combination of one or more of them with one or more layers of screen and/or mesh.

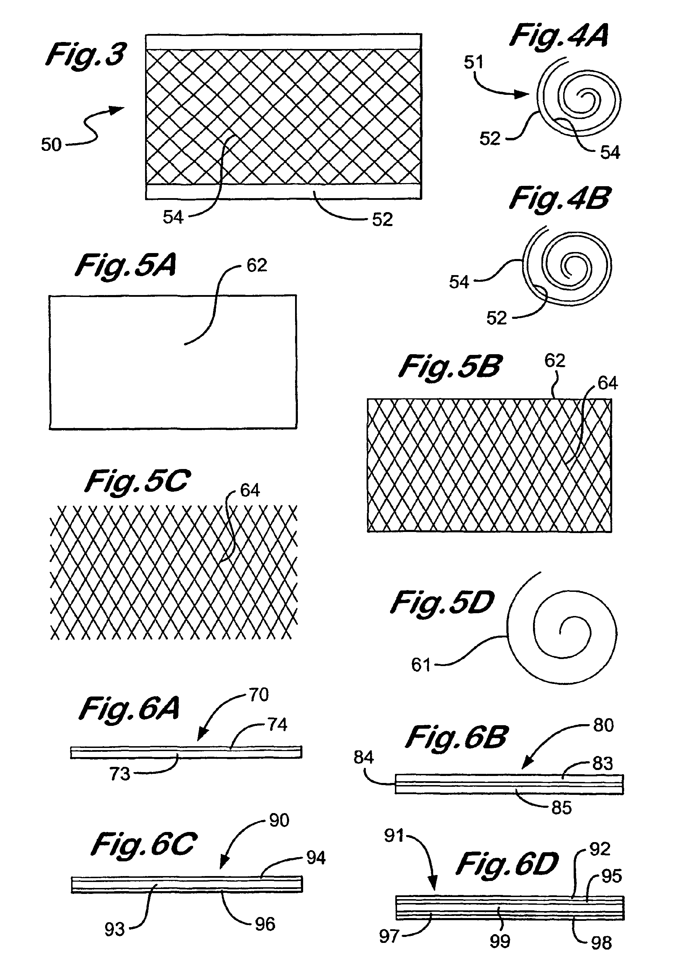

Figure 3 shows a glue/substrate combination 50 with a paper substrate 52 and a glue pattern 54 deposited thereon (using any glue suitable for use in a screen assembly for a vibratory separator). Alternatively, the pattern may be any desired pattern including any pattern disclosed herein.

Figure 4A illustrates a roll 51 of the glue/substrate combination 50 of Figure 3. As shown the roll is rolled with the substrate on the roll's exterior and the glue pattern disposed internally of the roll; but it is within the scope of this invention for the position of these components to be reversed (as is true of any roll of material according to the present invention), for example, as shown in Figure 4B. Such a roll (and any roll of material described herein) may be unrolled for subsequent use. In certain aspects, as needed, such a roll of material may be heated to facilitate its unrolling.

Figure 5A illustrates a piece of release liner material 62 (or wax paper or waxed cardboard) to which a glue pattern is to be applied. Figure 5B shows a resulting glue pattern 64 applied to the release liner material 62. Figure 5C shows the resulting layer of glue pattern 64 after it has been separated from the substrate of release liner material 62. The layer of glue pattern 62 may be used flat as shown in Figure 5C; or as shown in Figure 5D it can be rolled into a roll 61 for further future use.

Figure 6A shows a screen assembly 70 according to the present invention with a glue pattern 74 according to the present invention that has been separated from a substrate to which it was previously applied. The glue pattern 74 has been applied onto a layer (or layers) of screening material 73. According to the present invention the glue pattern 74 (any glue pattern according to the present invention) may be pressed onto and/or into the screening material 73 and/or heat may be applied to the combination of glue pattern and screen layer to fuse and/or connect the two together and/or to impregnate the screening material 73 with some or all of the glue pattern 74. The screening material 73 may be any screen, screens, mesh, or meshes, or any combination thereof. The glue pattern and screen layer(s) may be pressed together in any suitable manner; for example, but not limited to, between dual opposed pressing rollers, by a flat plate (heated or not) placed on top of the combination; and/or between the flat plates of a press apparatus.

Figure 6B shows a screen assembly 80 according to the present invention which has a glue pattern layer 84 (like the glue pattern 74, Figure 6A or any of its alternative versions) between two screen layers 83, 85 (each like the screen layer 73, Figure 6A or any of its alternative versions). Figure 6C illustrates a screen assembly 90 with two glue pattern layers 94, 96 (each like the glue pattern layer 74, Figure 6A, or any of its alternative embodiments). A screen layer 93 (like the screen layer 73, Figure 6A or any of its alternative embodiments) is disposed between the glue pattern layers 94, 96. The components of the screen assemblies of Figures 6B and 6C may be heat treated and/or pressure treated as are the components of the screen assembly 70, Figure 6A, as described above.

Figure 6D shows a screen assembly according to the present invention with a screening material layer 99 on either side of which are glue pattern layers 95 and 97. Each glue pattern layer has not been separated from a substrate 92, 98 respectively on which the glue pattern layers have been previously deposited. The screening material layer 99 may be any screening material disclosed herein. The substrates 92, 98 may be any substrates disclosed herein. In one particular embodiment the substrates are suitable cardboard release material (for example, waxed) which serves as a protective cover or package (with ends appropriately folded over and/or sealed) for the resulting screen assembly. Such cardboard may be sized and of such a nature to withstand any heat treatment and/or pressure treatment to the glue/screening material combination.

It is within the scope of this invention for any screen assembly described herein that includes a glue pattern layer to include a substrate on which the glue pattern layer is formed. The substrate is subsequently removed from the resulting screen assembly by peeling it away, by burning, by chemical degradation (chemical applied with or without pressure) or by liquid (for example, water) blasting. In any embodiment of a screen assembly herein that employs a glue/substrate combination in the screen assembly, the substrate side or the glue pattern side may be on the exterior on either top or bottom (or both) of the screen assembly. It is also within the scope of this invention for the substrate to include multiple layers of similar or different material.

"Screening material" for any screen or screen assembly in Figures 1A to 6C may, be any screening material disclosed herein but not limited thereto and it may be corrugated following glue application. Such corrugation may be in the form of any corrugated screen disclosed in the prior art for use on vibratory separators or shale shakers.

## Claims

1. A method for making a screen for a vibratory separator using an apparatus comprising a main body and a plurality of nozzles movably connected thereto and at least one edging nozzle, the method comprising the steps of placing at least one layer of screening material below said apparatus,
applying glue from at least one of said plurality of nozzles in a pattern to at least a portion of the at least one layer of screening material by moving said plurality of nozzles over the at least one layer of screening material,
applying a glue bead from the at least one edging nozzle to the screening material with said edging nozzle, to facilitate creation of at least a part of a border to said screen, and
shearing the screening material along said glue bead to create an edge to said screening material.

2. A method according to Claim 1, wherein said apparatus nozzles are in fixed on a manifold and said manifold moves whilst applying glue through said plurality of nozzles.

3. A method according to Claim 1 or 2, further comprising the step of shearing the screening material along said glue bead to create separate sections of said screening material.

4. A method according to any preceding claim, wherein the glue bead is sheared into two bead portions, each bead portion at an edge of a resulting separate section of screening material.

5. A method according to any preceding claim, wherein said apparatus comprises an edging manifold on which said plurality of edging nozzles are arranged, each for applying a separate glue bead to said screening material, the method further comprising the step of applying a plurality of spaced-apart glue beads to said screening material.

6. A method according to any preceding claim, further comprising the step of applying a total of four glue beads in two spaced-apart pairs to the screen, and shearing along the length of at least one of said glue beads to produce a four-sided screen with a portion of each glue bead along an edge of each of the four sides of the at least one four sided screen.

7. A method according to any preceding claim, further comprising the step of continuously moving the at least one layer of screening material beneath the glue application apparatus.

8. A method according to Claim 7, wherein the rate of movement of the at least one layer of screening material beneath the apparatus is between 0.025m/s (5 feet per minute) and 0.15m/s (30 feet per minute).

9. A method according to any preceding claim, wherein said layer of screening material is a substrate and the method further comprises the steps of applying screening material to said glue and separating said substrate from said glue.

10. A method as claimed in Claim 9, wherein the substrate is one of the following: paper, cardboard, kraft paper, wax paper, waxed cardboard, release liner material, and material from which glue is separable without deforming or destroying the glue and without adversely affecting a desired glue pattern.

11. An apparatus for making a screen, said apparatus **characterised in that** it comprises a manifold (1) having a plurality of nozzles (6) arranged thereon for applying glue to a screen and at least one edging nozzle (7) for applying a glue bead to facilitate creation of at least a part of a border to said screen and a shearing apparatus for shearing the screening material along said glue bead to create an edge to said screening material.

12. An apparatus as claimed in Claim 11, further comprising a main body (4), and means to allow said manifold (1) to move relative to said main body (4).

13. An apparatus as claimed in Claim 12, further comprising a second manifold (2) having a plurality of nozzles (5), and means (CA) to allow said second manifold (2) to move relative to said main body (4).

14. An apparatus as claimed in Claim 12 and 13, wherein said means (CA) comprises a cam and yoke arrangement.

15. An apparatus as claimed in Claim 12, 13 or 14, further comprising an edging manifold (3) having at least one said edging nozzle (7).

16. An apparatus as claimed in Claim 15, wherein said edging manifold (3) is fixed relative to said main body (4).

17. An apparatus as claimed in any of Claims 11 to 16, further comprising a conveyor (9) for conveying a screen or substrate beneath said nozzles (5,6) and at least one edging nozzle (7).

18. An apparatus as claimed in Claim 17, wherein said manifold (1) is arranged substantially perpendicular to the direction of travel of said conveyor (9).

19. A screen made by the method according to any of Claims 1 to 10, said screen comprising a sheared glue bead forming at least a part of a border to said screen.

20. A screen according to Claim 19, wherein said screen is a roll of screen.

## Patentansprüche

1. Verfahren zur Herstellung eines Siebes für eine Vibrationstrennvonichtung unter Verwendung einer Vorrichtung mit einem Hauptkörper und mehreren damit bewegbar verbundenen Düsen und mit zumindest einer Randdüse, wobei das Verfahren die Schritte aufweist, zumindest eine Lage aus Siebmaterial unter der Vorrichtung zu platzieren,
einen Kleber aus zumindest einer der mehreren Düsen in einem Muster auf zumindest einem Bereich der zumindest einen Lage aus Siebmaterial aufzubringen, indem die mehreren Düsen über die zumindest eine Lage aus Siebmaterial bewegt werden,
eine Kleberwulst aus der zumindest einen Randdüse auf das Siebmaterial mit Hilfe der Randdüse aufzubringen, um das Erzeugen zumindest eines Teiles eines Randes für das Sieb zu erleichtern, und
das Siebmaterial entlang der Kleberwulst abzuscheren, um einen Rand für das Siebmaterial zu erzeugen.

2. Verfahren nach Anspruch 1, wobei die Düsen der Vorrichtung fest an einem Verteiler angeordnet sind und dieser Verteiler sich bewegt, wenn Kleber durch die mehreren Düsen aufgebracht wird.

3. Verfahren nach Anspruch 1 oder 2, wobei ferner der Schritt vorgesehen ist, das Siebmaterial längs des Kleberwulstes abzuscheren, um voneinander getrennte Abschnitte des Siebmateriales zu erzeugen.

4. Verfahren nach einem der vorhergehenden Ansprüche, wobei die Kleberwulst in zwei Wulstbereiche getrennt wird, wobei jeder Wulstbereich den Rand eines daraus resultierenden getrennten Abschnittes aus Siebmaterial bildet.

5. Verfahren nach einem der vorhergehenden Ansprüche, wobei die Vorrichtung einen Randverteiler aufweist, an dem die mehreren Randdüsen angeordnet sind, die jeweils zum Aufbringen eines separaten Kleberwulstes auf das Siebmaterial ausgebildet sind, wobei das Verfahren ferner den Schritt aufweist, mehrere voneinander mit Abstand angeordnete Kleberwülste auf das Siebmaterial aufzubringen.

6. Verfahren nach einem der vorhergehenden Ansprüche, wobei ferner der Schritt vorgesehen ist, insgesamt vier Kleberwülste in zwei voneinander mit Abstand angeordneten Paaren auf das Siebmaterial aufzubringen, und zumindest eine der Klebewülste in Längsrichtung aufzutrennen, um ein vierseitiges Sieb mit einem Teil jeder Klebewulst entlang eines Randes an allen vier Seiten des zumindest einen vierseitigen Siebes zu erzeugen.

7. Verfahren nach einem der vorhergehenden Ansprüche, wobei ferner der Schritt vorgesehen ist, die zumindest eine Lage aus Siebmaterial unterhalb der Kleber auf bringenden Vorrichtung kontinuierlich zu bewegen.

8. Verfahren nach Anspruch 7, wobei die Bewegungsgeschwindigkeit der zumindest einen Lage aus Siebmaterial unter der Vorrichtung zwischen 0,025 m/s (5 Fuß pro Minute) und 0,15 m/s (30 Fuß pro Minute) ist.

9. Verfahren nach einem der vorhergehenden Ansprüche, wobei die Lage aus Siebmaterial ein Substrat ist, und das Verfahren ferner die Schritte aufweist, Siebmaterial auf den Kleber aufzubringen und das Substrat von dem Kleber zu trennen.

10. Verfahren nach Anspruch 9, wobei das Substrat eines der folgenden Materialien ist: Papier, Karton, Kraftpapier, Wachspapier, Wachskarton, ablösbares Bogenmaterial und ein Material, von dem Klebstoff entfernbar ist, ohne den Klebstoff zu deformieren oder zu zerstören und ohne ein gewünschtes Klebstoffmuster negativ zu beeinflussen.

11. Vorrichtung zum Herstellen eines Siebes, wobei die Vorrichtung **dadurch gekennzeichnet ist, dass** sie einen Verteiler (1) mit mehreren darauf angeordneten Düsen (6) zum Aufbringen eines Klebers auf ein Sieb und zumindest eine Randdüse (7) zum Aufbringen einer Kleberwulst aufweist, um das Ausbilden von zumindest eines Teiles eines Randes des Siebes zu erleichtern, und ferner eine Trennvorrichtung aufweist, um das Siebmaterial längs der Kleberwulst aufzutrennen, um einen Rand für das Siebmaterial zu erzeugen.

12. Vorrichtung nach Anspruch 1, die ferner einen Hauptkörper (4) und eine Einrichtung zum Ermöglichen einer Bewegung des Verteilers (1) relativ zu dem Hauptkörper (4) aufweist.

13. Vorrichtung nach Anspruch 12, die ferner einen zweiten Verteiler (2) mit mehreren Düsen (5) und eine Einrichtung (CA) aufweist, um eine Bewegung des zweiten Verteilers (2) relativ zu dem Hauptkörper (4) zu ermöglichen.

14. Vorrichtung nach Anspruch 12 und 13, wobei die Einrichtung (CA) eine Nocken-Joch-Anordnung aufweist.

15. Vorrichtung nach Anspruch 12, 13 oder 14, wobei ferner ein Randverteiler (3) mit zumindest einer Randdüse (7) vorgesehen ist.

16. Vorrichtung nach Anspruch 15, wobei der Randverteiler (3) relativ zu dem Hauptkörper (4) fest ist.

17. Vorrichtung nach einem der Ansprüche 11 bis 16, wobei ferner eine Fördereinrichtung (9) zum Fördern eines Siebes oder eines Substrates unter die Düsen (5, 6) und zumindest eine Randdüse (7) vorgesehen ist.

18. Vorrichtung nach Anspruch 17, wobei der Verteiler (1) im Wesentlichen senkrecht zu der Förderrichtung der Fördereinrichtung (9) angeordnet ist.

19. Sieb, das nach dem Verfahren entsprechend einem der Ansprüche 1 bis 10 hergestellt ist, wobei das Sieb eine aufgetrennte Kleberwulst aufweist, die zumindest einen Teil eines Randes für das Sieb bildet

20. Sieb nach Anspruch 19. wobei das Sieb zu einer Rolle aufgerollt ist.

## Revendications

1. Procédé de fabrication d'un tamis destiné à un séparateur vibrant, utilisant un dispositif comprenant un corps principal et une pluralité de buses raccordées à lui de façon mobile et au moins une buse de bordure, le procédé comprenant les étapes consistant à placer au moins une couche de matériau de tamisage au-dessous dudit dispositif,
à appliquer de la colle provenant de l'une au moins de ladite pluralité de buses suivant une configuration destinée à au moins une partie de ladite (desdites) couche(s) de matériau de tamisage en déplaçant ladite pluralité de buses sur la (les) couche(s) de matériau de tamisage,
appliquer un cordon de colle provenant de la, ou des, buse(s) de bordure au matériau de tamisage avec la buse de bordure pour faciliter la création d'au moins une partie de bordure pour ledit tamis, et
cisailler le matériau de tamisage le long dudit cordon de colle pour créer un bord audit matériau de tamisage.

2. Procédé selon la revendication 1, dans lequel lesdites buses du dispositif sont en position fixe sur un distributeur et ledit distributeur se déplace tout en appliquant de la colle à travers ladite pluralité de buses.

3. Procédé selon la revendication 1 ou 2, comprenant, de plus, l'étape consistant à cisailler le matériau de tamisage le long dudit cordon de colle pour créer des sections séparées de matériau de tamisage.

4. Procédé selon l'une quelconque des revendications précédentes, dans lequel le cordon de colle est cisaillé en deux parties de cordon, chaque partie de cordon se trouvant au niveau d'un bord d'une section séparée du matériau de tamisage, résultante dudit cisaillement.

5. Procédé selon l'une quelconque des revendications précédentes, dans lequel ledit dispositif comprend un distributeur de bordure sur lequel ladite pluralité de buses de bordure est disposée, chacune servant à appliquer un cordon de colle séparé audit matériau de tamisage, le procédé comprenant, de plus, l'étape consistant à appliquer une pluralité de cordons de colle séparés les uns des autres audit matériau de tamisage.

6. Procédé selon l'une quelconque des revendications précédentes, comprenant, de plus, l'étape consistant à appliquer un total de quatre cordons de colle en deux paires séparées l'une de l'autre sur le tamis et à cisailler sur toute la longueur d'au moins un desdits cordons de colle afin de produire un tamis à quatre côtés avec une partie de chaque cordon de colle le long d'un bord de chacun des quatre côtés d'au moins un tamis à quatre côtés.

7. Procédé selon l'une quelconque des revendications précédentes, comprenant, de plus, l'étape consistant à déplacer en continu la (les) couche(s) de matériau de tamisage au-dessous du dispositif d'application de colle.

8. Procédé selon la revendication 7, dans lequel la vitesse de déplacement d'au moins une couche de matériau de tamisage au-dessous du dispositif se situe entre 0,025 m/s (5 pieds par minute) et 0,15 m/s (30 pieds par minute).

9. Procédé selon l'une quelconque des revendications précédentes, dans lequel ladite couche de matériau de tamisage est un substrat et le procédé comprend, de plus, les étapes consistant à appliquer un matériau de tamisage à ladite colle et à séparer ledit substrat de ladite colle.

10. Procédé selon la revendication 9, dans lequel le substrat est l'un des substrats suivants : papier, carton, papier kraft, papier paraffiné, carton ciré, matériau de couverture séparable, et matériau duquel la colle est séparable sans déformer ou détruire la colle et sans affecter négativement une configuration de colle souhaitée.

11. Dispositif pour réaliser un tamis, ledit dispositif étant **caractérisé en ce qu'**il comprend un distributeur (1) comportant une pluralité de buses (6) disposées sur lui pour appliquer de la colle à un tamis et au moins une buse de bordure (7) pour appliquer un cordon de colle afin de faciliter la création d'au moins une partie d'une bordure pour ledit tamis et un dispositif de cisaillement pour cisailler le matériau de tamisage le long dudit cordon de colle afin de créer une bordure pour ledit matériau de tamisage.

12. Dispositif selon la revendication 11, comprenant, de plus, un corps principal (4), et des moyens pour permettre audit distributeur (1) de se déplacer par rapport audit corps principal (4).

13. Dispositif selon la revendication 12, comprenant, de plus, un second distributeur (2) comportant une pluralité de buses (5), et des moyens (CA) pour permettre audit second distributeur (2) de se déplacer par rapport audit corps principal (4).

14. Dispositif selon la revendication 12 et 13, dans lequel lesdits moyens (CA) comprennent un agencement de came et d'étrier.

15. Dispositif selon la revendication 12, 13 ou 14 comprenant, de plus, un distributeur de bordure (3) comportant au moins une dite buse de bordure (7).

16. Dispositif selon la revendication 15, dans lequel ledit distributeur de bordure (3) est fixé par rapport audit corps principal (4).

17. Dispositif selon l'une quelconque des revendications 11 à 16 comprenant, de plus, un convoyeur (9) pour acheminer un tamis ou un substrat au-dessous desdites buses (5, 6) et d'au moins une buse de bordure (7).

18. Dispositif selon la revendication 17 dans lequel ledit distributeur (1) est agencé de façon essentiellement perpendiculaire à la direction de déplacement dudit convoyeur (9).

19. Tamis fabriqué par le procédé selon l'une quelconque des revendications 1 à 10, ledit tamis comprenant un cordon de colle cisaillé formant au moins une partie d'une bordure dudit tamis.

20. Tamis selon la revendication 19 dans lequel ledit tamis est un cylindre de tamisage.
